# EUROPEAN PATENT SPECIFICATION

(11) **EP 2 286 098 B1**
(45) Date of publication and mention of the grant of the patent: **26.10.2011**
(21) Application number: 08774140.1
(22) Date of filing: 19.06.2008
(51) Int. Cl.: F16C 11/06, F16C 1/22, F16C 7/06

(54) **CONNECTOR SYSTEM**
VERBINDERSYSTEM
SYSTEME DE LIAISON

(43) Date of publication of application: 23.02.2011
(73) Proprietor: Kongsberg Actuation Systems GmbH, 42579 Heiligenhaus (DE)
(72) Inventor: MÜLLER, Bert, 40882 Ratingen (DE); TIWISINA, Arnd, 45257 Essen (DE); WESSELING, Norbert, 46342 Velen (DE)
(74) Representative: UEXKÜLL & STOLBERG
(86) International application number: PCT/EP2008/057762
(87) International publication number: WO 2009/152857

(56) References cited:
- EP-A- 1 041 302
- DE-A1- 19 941 995
- FR-A- 2 821 133
- GB-A- 2 088 502

## Description

The present invention refers to a connector system and a method for connecting an elongate body to a movable body, particularly a control cable to a movable part of a gear shift system in a vehicle, wherein the connector system comprises a terminal unit, an adjuster rod and an operable securing means, wherein the adjuster rod is connectable to the elongate body and the terminal unit is connectable to the movable body.

It is known to transfer shift commands from the shift lever of a vehicle to the gearbox via one or more control cables. Control cables are used in manual as well as automatic shifting systems. The cables are used to transfer the movement of the shift lever to the gearbox and therefore need to be mechanically connected to the shift lever with one end and to a gearbox actuator at the other end. These connections at each end are provided by connector systems.

Due to tolerances in the production and a variation of the shifting system design and/or the mounting procedures between different vehicles the connector system should provide a simple possibility to adjust the length of the cable and the angular orientation of the cable with respect to the movable parts it is supposed to be connected to.

Connector systems which are suitable to connect a control cable to a movable part of a gear shift system in a vehicle are for example described in EP 0641 945 B1, EP 1041 302 A1 or DE 197 30 683 A1. These solutions have the disadvantage that they provide for an adjustment of the cable length only, but they do not provide for an angular adjustment. The correct angular adjustment is necessary to avoid excessive wear due to a permanent torque on the cable.

In order to provide adequate driving comfort and a swift reaction of the gear box on shift commands there must be a relatively high tension on the control cable. This is also necessary to avoid noise that would be generated by a comparatively loose control cable. Due to the required tension on the control cable there is a high frictional contact between the control cable and the connector systems and/or between the connector system and the movable parts they are connected to. Thereby, the control cable is unable to automatically adjust the angular position. The known solutions solve this problem by using a special expert's tool to adjust the angular position once the longitudinal position is fixed. This is very cumbersome, time-consuming and therefore expensive with regard to the amount of work involved in a production, service or maintenance process.

It is the object of the present invention to provide an improved connector system and an improved method for connecting an elongate body to a movable body which allows an adjustment of the longitudinal position and the angular position of the elongate body relative to the movable body without the disadvantages known from the prior art.

This object is solved by the inventive connector system and method comprising the features of claim 1 and 7, respectively. Preferred embodiments of the invention are subject of the dependent claims.

According to a first aspect of the present invention a connector system for connecting an elongate body to a movable body, particularly a control cable to a movable part of a gear shift system in a vehicle, is provided, wherein the connector system comprises a terminal unit, an adjuster rod and an operable securing means, wherein the adjuster rod is connectable to the elongate body and the terminal unit is connectable to the movable body, **characterised in that** the adjuster rod has a first axial position and a second axial position relative to the terminal unit, and wherein the adjuster rod is rotatable relative to the terminal unit in the first axial position and locked against rotation relative to the terminal unit in the second axial position, and the operable securing means is able to secure the adjuster rod against an axial movement relative to the terminal unit in the second axial position.

The inventive connector system has the advantage that no special expert's tool needs to be used to adjust the angular position. The angular position can be adjusted as long as the adjuster rod is located in the first angular position relative to the terminal unit. This can be done easily by hand as there is not yet a high tension on the cable. By moving the adjuster rod into the second axial position the control cable is tightened until the desired longitudinal position is reached. In the second axial position the adjuster rod is locked against rotation relative to the terminal unit.

To achieve this the adjuster rod preferably comprises a fitting portion and the terminal unit preferably comprises a longitudinal cavity having a first portion and a second portion. The fitting portion of the adjuster rod may be located within the first portion of the cavity when the adjuster rod is in the first axial position relative to the terminal unit and the fitting portion of the adjuster rod may be located within the second portion of the cavity when the adjuster rod is in the second axial position relative to the terminal unit.

The rotational locking in the second axial position is preferably achieved by a cross-sectional outer shape of the fitting portion of the adjuster rod which fits geometrically into the second portion of the cavity such that the adjuster rod is locked against rotation relative to the terminal unit in the second axial position. This cross-sectional outer shape of the fitting portion of the adjuster rod and the cross-sectional inner shape of the second portion of the cavity may for example be hexagonal, octagonal or star-shaped.

In a preferred embodiment of the inventive connector system the adjuster rod may comprise a locking portion having at least one projection adapted to be engaged by at least one corresponding recess of the securing means. In order to allow an exact longitudinal adjustment the locking portion of the adjuster rod preferably has a plurality of projections forming a ribbed outer profile and the securing means preferably has a plurality of corresponding recesses forming a ribbed inner corresponding profile. The projections and recesses may be aligned cirumferentially around the adjuster rod and the securing means, respectively.

According to a second aspect of the present invention a method for connecting an elongate body to a movable body, particularly a control cable to a movable part of a gear shift system in a vehicle, is provided using a connector system comprising a terminal unit, an adjuster rod and an operable securing means, wherein the adjuster rod is connected to the elongate body and the terminal unit is connectable to the movable body, wherein the method comprises the following steps:
- moving the adjuster rod into a first axial position relative to the terminal unit, in which the adjuster rod is rotatable relative to the terminal unit,
- then adjusting the angular position of the adjuster rod relative to the terminal unit,
- then moving the adjuster rod into a second axial position relative to the terminal unit, in which the adjuster rod is locked against rotation relative to the terminal unit, and
- then securing the adjuster rod against an axial movement relative to the terminal unit.

Compared to the known solutions in the prior art, i.e. first adjusting the length of the control cable and afterwards the angular position by using an expert's tool, the inventive method comprises an adjusting step of the angular position before securing the adjuster rod against an axial movement relative to the terminal in a desired second axial position. The connecting method is significantly simplified as there is no extra expert's tool necessary to adjust the angular position.

In the following a preferred embodiment of the invention is discussed in further detail with reference to the accompanying figures.
Fig. 1 shows a perspective view of a control cable connected to a movable part of a gear shift system via a preferred embodiment of the inventive connector system.
Figs. 2 to 4 show three different side-views of a preferred embodiment of the inventive connector system with a connected control cable.
Figs. 5 to 7 show three different cross-sectional views of a preferred embodiment of the inventive connector system with a connected control cable.
Figs. 8 to 14 show five different perspective half-sectional views of a preferred embodiment of the inventive connector system with a connected control cable.

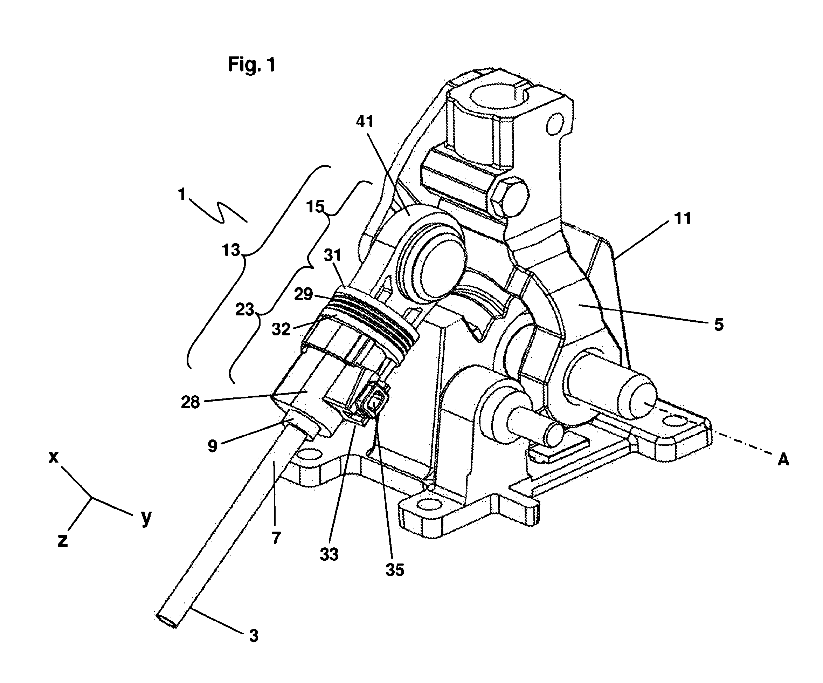

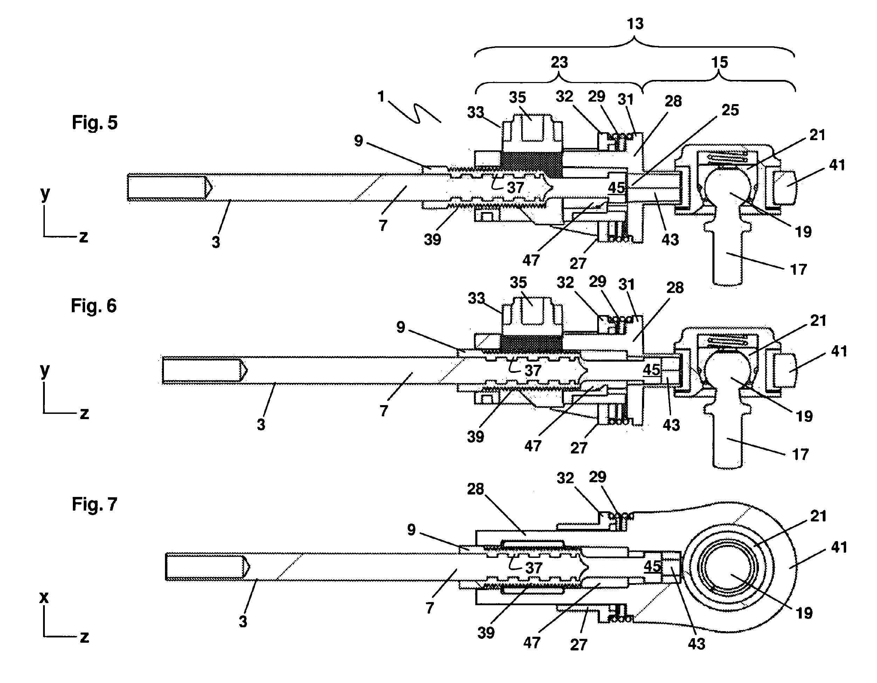

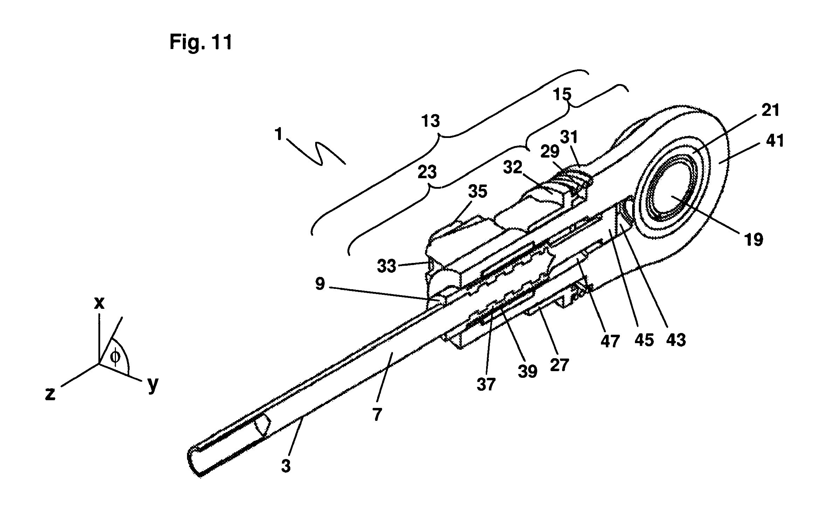

Fig. 1 illustrates a preferred embodiment of the inventive connector system 1 connecting a control cable 3 to a movable part 5 of a gear shift system in a vehicle. The connector system 1 is in particular intended to retain the end 3 of a flexible control cable 3, for example of the "push-pull" type, which has an end portion 7 provided with a plurality of radial recesses or projections which may be annularly shaped or formed by means of a fine pitch thread (see Figs. 5 to 11) in order to provide for a fixed connection between the control cable 3 and an adjuster rod 9. The control cable 3 may in particular be a cable for the transmission of clutch-engagement movement or the selection from a selector lever unit of the gear change of a vehicle associated with the vehicle engine. The movable part 5 is a lever arm 5 which is arranged to transfer a gear select or shift command from the control cable 3 towards the gear box unit 11. However, this connector system 1 can be utilised in general whenever it is necessary to provide a connection for an elongate body 3 which makes it possible to perform a fine adjustment of the longitudinal and angular position of the elongate body 3 with respect to any movable member 5.

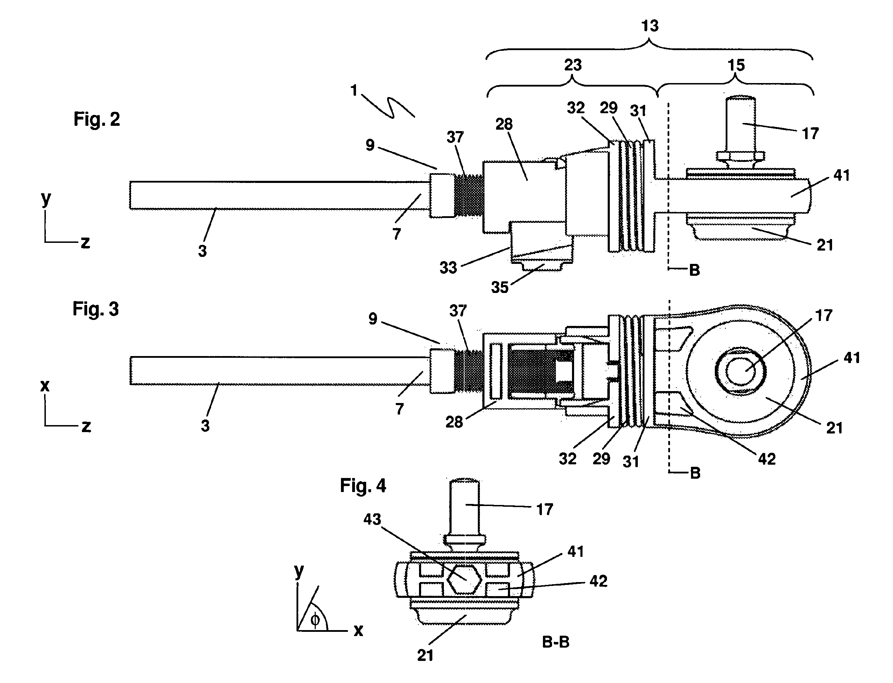

A Cartesian coordinate system is defined by the longitudinal axis z of the end portion 7 of the control cable 3 which is connected to the movable part 5. The transversal axes x and y span the radial plane in which the azimuthal angle φ determines the angular position (see Fig. 4). The end portion 7 of the control cable 3 is connected to the adjuster rod 9 of which only a small part protruding out of a terminal unit 13 is visible in Fig. 1.

The terminal unit 13 comprises a head portion 15 hinged to the movable part 5, i.e. a pivotable lever 5 and projecting from the gear box unit 11. To provide sufficient flexibility the head portion 15 comprises a ball-ended spindle 17 with a spherical head 19 located in a ball joint socket 21 of the head portion 15 (see Figs. 5, 6, 8, 10 or 12). The spindle 17 extends in the y-direction transversely to the longitudinal axis z of the terminal unit 13 to allow a pivot movement about the transverse axis y. The pivot axis A of the lever 5 is also directed parallel to the y-axis.

The head portion 15 of the terminal unit 13 is connected to a sleeve portion 23 of the terminal unit 13 which defines an essentially cylindrical longitudinal inner cavity 25 for receiving the adjuster rod 9 connected to an end portion 7 of the control cable 3. The sleeve portion 23 may comprise a surrounding locking sleeve 27 which is longitudinally movable with respect to the main body 28 of the sleeve portion 23 and spring loaded by means of a spring 29. The spring 29 is located between a flange rim 31 of the main body 28 of the sleeve portion 23 and a flange rim 32 of the locking sleeve 27. The locking sleeve 27 is thereby biased away from the head portion 15 of the terminal unit 13.

The sleeve portion 23 of the terminal unit 13 also comprises an operable securing means 33 comprising a button 35 that may be manually pushed radially inwards to secure the adjuster rod 9 in a longitudinal position, i.e. on the z-axis relative to the terminal unit 13. The spring-loaded locking sleeve 27 may lock the button 35 in a radial pushed-in locking position by shifting at least partly over the button 35 or an extension thereof.

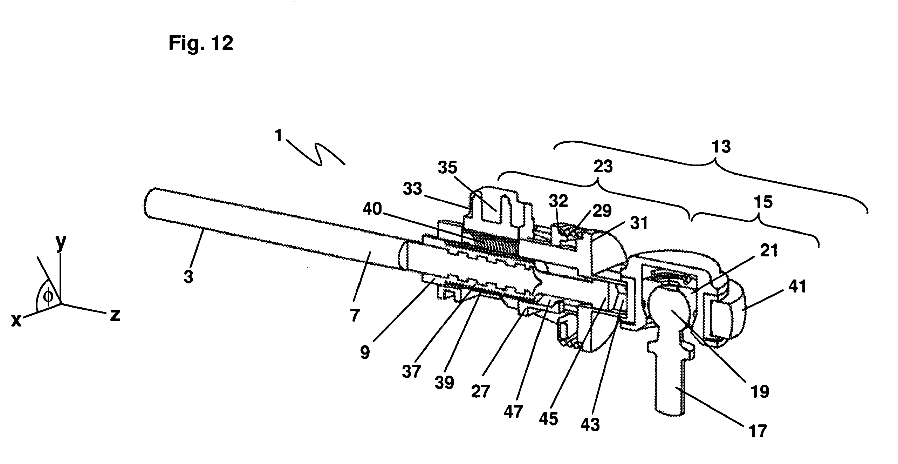

Figs. 2 to 4 show three different side-views of the connector system 1 connected to the control cable 3. The adjuster rod 9 is in a slightly pulled out longitudinal position with respect to the terminal unit 13. Therefore, it is visible that the adjuster rod 9 comprises a locking portion 37 having a plurality of radial projections 39 forming a ribbed outer profile. These radial projections 39 are adapted to be engaged by a plurality of radial recesses 40 of the securing means 33 forming a ribbed inner corresponding profile (see Fig. 12). By manually pressing the button 35 of the securing means 33 radially inwards the matching profiles may be brought into engagement such that the adjuster rod 9 is secured in the longitudinal z-direction relative to the terminal unit 13.

Fig. 4 is rather a cross-sectional view on the plane B-B further allowing a side view on the head portion 15 of the terminal unit 13 along the positive z-axis. The main body 41 of the head portion 15 of the terminal unit 13 may be moulded or cast with cavities 42 in order to save material and weight. The central hexagon shows the cross-sectional shape of a second portion 43 of a longitudinal inner cavity 25 of the terminal unit 13 which is adapted to receive the adjuster rod 9.

Figs. 5 to 7 show that the longitudinal inner cavity 25 contains a major portion of the adjuster rod 9 which is fixed to an end portion 7 of the control cable 3. In addition to the locking portion 37 having a plurality of radial projections 39 forming a ribbed outer profile the adjuster rod 9 comprises a fitting portion 45 forming the very end portion of the adjuster rod 9. The longitudinal inner cavity 25 has a first portion 47 and a second portion 43. The difference between the first portion 47 and a second portion 4 of the longitudinal inner cavity 25 is that the hexagonal cross-sectional outer shape of the fitting portion 45 of the adjuster rod 9 fits geometrically into the second portion 43 of the cavity 25 whereas the fitting portion 45 is rotatable inside the first portion 47. This means that the minimal radial extension of the first portion 47 of the cavity 25 is larger than the minimal radial extension of the second portion 43 of the cavity 25 .

Thereby, a first and a second axial position of the adjuster rod 9 may be defined as such: the fitting portion 45 of the adjuster rod 9 is located within the first portion 47 of the cavity 25 when the adjuster rod 9 is in the first axial position relative to the terminal unit 13 and the fitting portion 45 of the adjuster rod 9 is located within the second portion 43 of the cavity 25 when the adjuster rod 9 is in the second position relative to the terminal unit 13. Due to the fact that the hexagonal cross-sectional outer shape of the fitting portion 45 of the adjuster rod 9 fits geometrically into the second portion 43 of the cavity 25 the adjuster rod 9 is locked against rotation relative to the terminal unit 13 in the second axial position.

Fig. 5 shows the adjuster rod 9 in a first axial position relative to the terminal unit 13. In this first axial position the adjuster rod 9 is in a slightly pulled out longitudinal position with respect to the terminal unit 13 (as shown in Figs. 2 and 3). The fitting portion 13 of the adjuster rod 9 is located within the first portion 47 of the cavity 25 and therefore rotatable relative to the terminal unit 13. In this position the assembling person may adjust the angular position before the longitudinal position is determined. The hexagonal shape gives the possibility to choose an angular position in steps of 60°. If a finer step size for a more precise angular adjustment is necessary the cross-sectional outer shape of the fitting portion 45 of the adjuster rod 9 and the second portion 43 of the cavity 25 may be designed as an octagon or another star-like shape allowing for an even finer step size.

Once the angular position is determined by appropriate rotation of the adjuster rod 9 in the first axial position relative to the terminal unit 13 the adjuster rod 9 may be pushed axially inwards into the terminal unit 13 as shown in Figs. 6 and 7. The adjuster rod 9 is now in a second axial position relative to the terminal unit 13 as the fitting portion 45 of the adjuster rod 9 is located inside the second portion 43 of the cavity 25 of the terminal unit 13. The second portion 43 of the cavity 25 has a certain axial extension such that there is a range of axial positions which are a second axial position as defined above. This is necessary to have the possibility to adjust the exact longitudinal position of the adjuster rod 9. The control cable 3 may be tightened or loosened by this adjustment. The end portion 7 of the control cable 3 is, however, locked against rotation relative to the terminal unit 13.

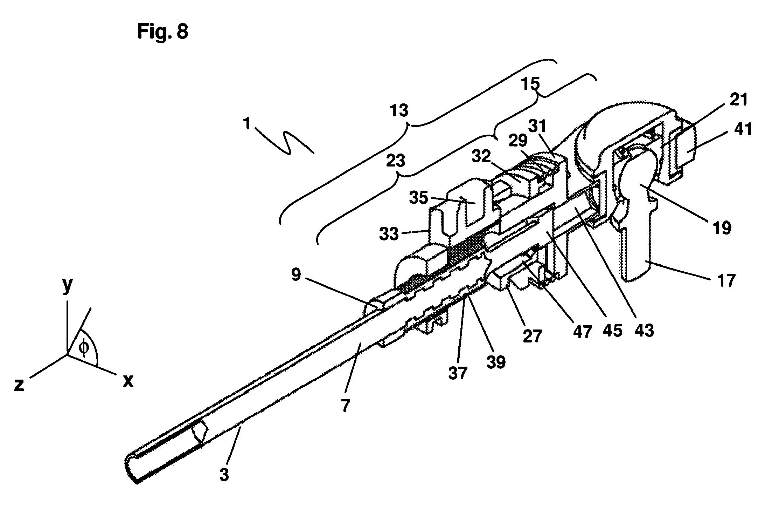

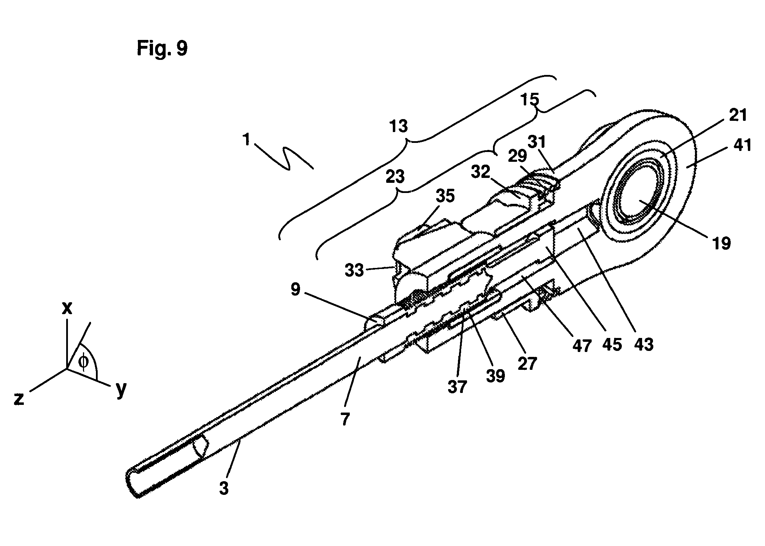

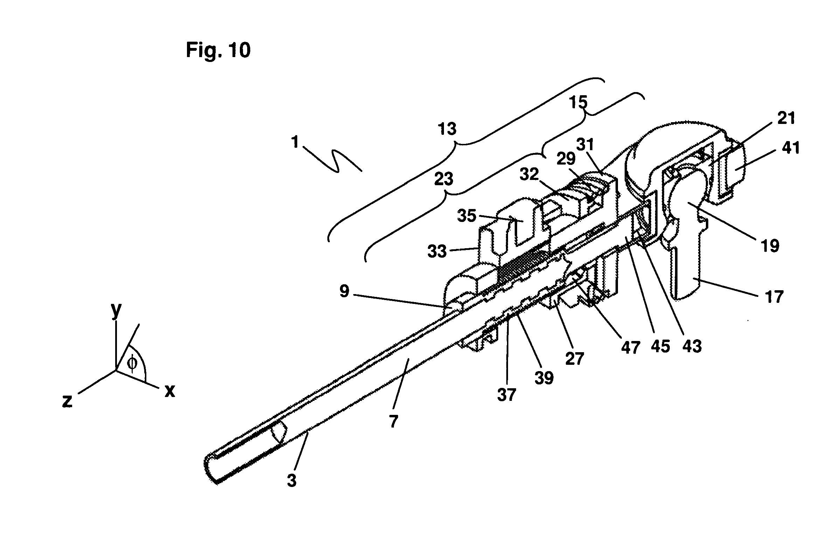

For the purpose of further illustration, Figs. 8 and 9 show the inventive connector system with the adjuster rod 9 in the first axial position relative to the terminal unit 13 in different perspective half-sectional views. Figs. 10 to 12 show the inventive connector system with the adjuster rod 9 in the second axial position relative to the terminal unit 13 in different perspective half-sectional views.

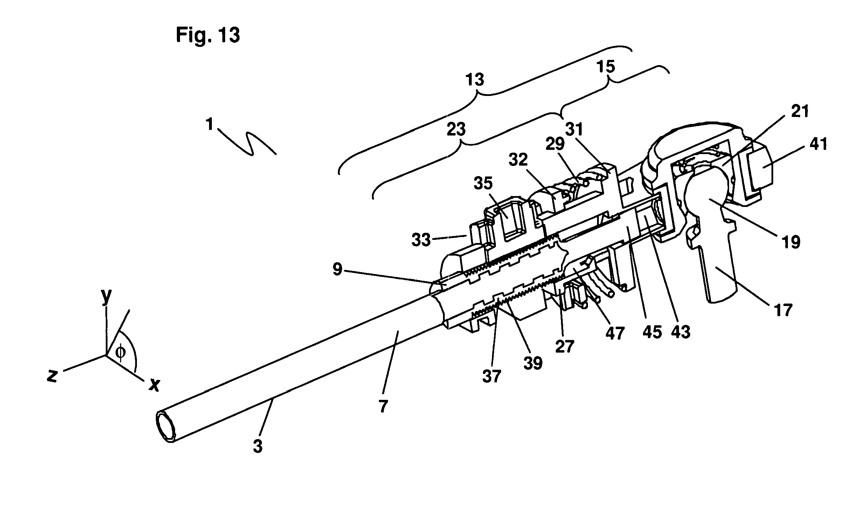

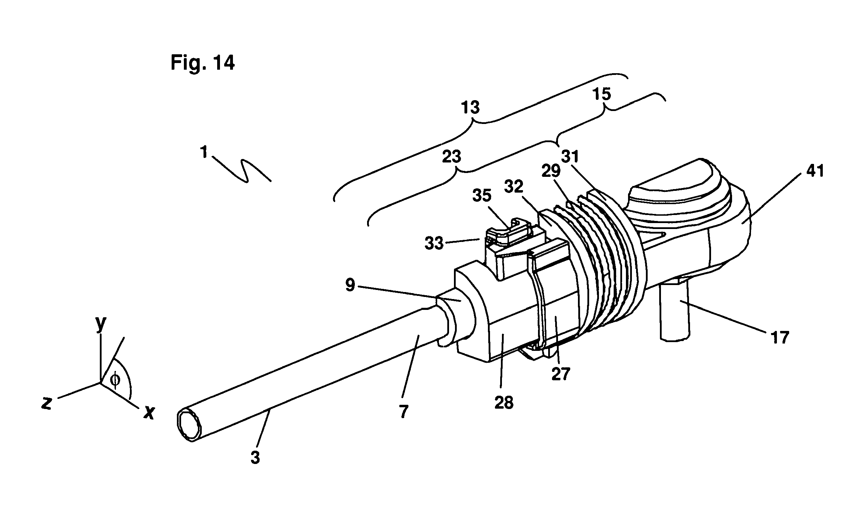

Figs. 13 and 14 show the inventive connector system with the operable securing means 33 in a locked state in which the button 35 is pressed radially inward to secure the adjuster rod 9 against an axial movement relative to the terminal unit 13 in the second axial position. It is visible that the adjuster rod 9 with its locking portion 37 having a plurality of radial projections 39 forming a ribbed outer profile is secured. The projections 39 are engaged by the plurality of radial recesses 40 of the securing means 33 forming a ribbed inner corresponding profile. The matching profiles are brought into engagement such that the adjuster rod 9 is secured in the longitudinal z-direction relative to the terminal unit 13 by manually pressing the button 35 of the securing means 33 radially inwards. The locking sleeve 27 of the sleeve portion 32 is also in a locking position, i.e. shifted longitudinally by means of the spring 29 towards the securing means 33 in order to prevent the button 35 from leaving the radially inward locking position. This is achieved by the fact that the locking sleeve 27 is shifted at least partly over the button 35 or an extension thereof. In order to unlock the connector system, the locking sleeve 27 must be manually pushed back against the spring force towards the head portion 15 of the terminal unit 13, such that the securing means 33 unlock the adjuster rod 9 for an axial movement relative to the terminal unit 13.

## Claims

1. A connector system (1) for connecting an elongate body (3) to a movable body (5), particularly a control cable (3) to a movable part (5) of a gear shift system (11) in a vehicle, wherein the connector system (1) comprises a terminal unit (13), an adjuster rod (9) and an operable securing means (33), wherein the adjuster rod (9) is connectable to the elongate body (3) and the terminal unit (13) is connectable to the movable body (5),
**characterised in that**
the adjuster rod (9) has a first axial position and a second axial position relative to the terminal unit (13), and wherein the adjuster rod (9) is rotatable relative to the terminal unit (13) in the first axial position and locked against rotation relative to the terminal unit (13) in the second axial position, and
the operable securing means (33) is able to secure the adjuster rod (9) against an axial movement relative to the terminal unit (13) in the second axial position.

2. A connector system according to claim 1, wherein the adjuster rod (9) comprises a fitting portion (45) and the terminal unit (13) comprises a longitudinal cavity (25) having a first portion (47) and a second portion (43), wherein the fitting portion (45) of the adjuster rod (9) is located within the first portion (47) of the cavity (25) when the adjuster rod (9) is in the first axial position relative to the terminal unit (13) and the fitting portion (45) of the adjuster rod (9) is located within the second portion (43) of the cavity (25) when the adjuster rod (9) is in the second axial position relative to the terminal unit (13).

3. A connector system according to claim 2, wherein the cross-sectional outer shape of the fitting portion (45) of the adjuster rod (9) fits geometrically into the second portion (43) of the cavity (25) such that the adjuster rod (9) is locked against rotation relative to the terminal unit (13) in the second axial position.

4. A connector system according to claim 3, wherein the cross-sectional outer shape of the fitting portion (45) of the adjuster rod (9) and the cross-sectional inner shape of the second portion (43) of the cavity (25) are hexagonal.

5. A connector system according to any one of the preceding claims, wherein the adjuster rod (9) comprises a locking portion (37) having at least one projection (39) adapted to be engaged by at least one corresponding recess (40) of the securing means (33).

6. A connector system according to claim 5, wherein the locking portion (37) of the adjuster rod (9) has a plurality of projections (39) forming a ribbed outer profile and the securing means (33) has a plurality of corresponding recesses (40) forming a ribbed inner corresponding profile.

7. A method for connecting an elongate body (3) to a movable body (5), particularly a control cable (3) to a movable part (5) of a gear shift system (11) in a vehicle, using a connector system (1) comprising a terminal unit (13), an adjuster rod (9) and an operable securing means (33), wherein the adjuster rod (9) is connected to the elongate body (3) and the terminal unit (13) is connectable to the movable body (5), wherein the method comprises the following steps:
- moving the adjuster rod (9) into a first axial position relative to the terminal unit (13), in which the adjuster rod (9) is rotatable relative to the terminal unit (13),
- then adjusting the angular position of the adjuster rod (9) relative to the terminal unit (13),
- then moving the adjuster rod (9) into a second axial position relative to the terminal unit (13), in which the adjuster rod (9) is locked against rotation relative to the terminal unit (13), and
- then securing the adjuster rod (9) against an axial movement relative to the terminal unit (13).

## Patentansprüche

1. Verbindersystem (1) zum Verbinden eines länglichen Körpers (3) mit einem beweglichen Körper (5), insbesondere eines Steuerkabels (3) mit einem beweglichen Teil (5) eines Gangschaltungssystems (11) in einem Fahrzeug, wobei das Verbindersystem (1) einen Endeinheit (13), einen Einstellstab (9) und zu betätigende Befestigungsmittel (33) aufweist, wobei der Einstellstab (9) mit dem länglichen Körper (3) verbindbar ist und die Endeinheit (13) mit dem beweglichen Körper (5) verbindbar ist,
**dadurch gekennzeichnet, dass**
der Einstellstab (9) eine erste axiale Stellung und eine zweite axiale Stellung relativ zu der Endeinheit (13) hat, und wobei der Einstellstab (9) in der ersten axialen Stellung relativ zu der Endeinheit (13) drehbar ist und in der zweiten axialen Stellung gegen Drehung relativ zu der Endeinheit (13) festgesetzt ist, und
dass die zu betätigenden Befestigungsmittel (33) dazu in der Lage sind, um den Einstellstab (9) gegen axiale Bewegung relativ zu der Endeinheit (13) in der zweiten axialen Stellung zu sichern.

2. Verbindersystem nach Anspruch 1, wobei der Einstellstab (9) einen Verbindungsbereich (45) und die Endeinheit (13) einen längsverlaufenden Hohlraum (25) aufweist, der einen ersten Bereich (47) und einen zweiten Bereich (43) umfasst, wobei sich der Verbindungsbereich (45) des Einstellstabs (9) innerhalb des ersten Bereichs (47) des Hohlraums (25) befindet, wenn sich der Einstellstab (9) in der ersten axialen Stellung relativ zu der Endeinheit (13) befindet, und sich der Verbindungsbereich (45) des Einstellstabs (9) innerhalb des zweiten Bereichs (43) des Hohlraums (25) befindet, wenn der Einstellstab (9) in der zweiten axialen Stellung relativ zu der Endeinheit (13) ist.

3. Verbindersystem nach Anspruch 2, wobei die äußere Querschnittsform des Verbindungsbereichs (45) des Einstellstabs (9) geometrisch so in den zweiten Bereich (43) des Hohlraums (45) passt, dass der Einstellstab (9) gegen Drehung relativ zu der Endeinheit (13) in der zweiten axialen Stellung festgesetzt ist.

4. Verbindersystem nach Anspruch 3, wobei die äußere Querschnittsform des Verbindungsbereichs (45) des Einstellstabs (9) und die innere Querschnittsform des zweiten Bereichs (43) des Hohlraums (25) sechseckig sind.

5. Verbindersystem nach einem der vorhergehenden Ansprüche, wobei der Einstellstab (9) einen Verbindungsbereich (37) aufweist, der wenigstens einen Vorsprung (39) umfasst, der dazu ausgestaltet ist, um in Eingriff mit wenigstens einer entsprechenden Vertiefung (40) der Befestigungsmittel (33) zu kommen.

6. Verbindersystem nach Anspruch 5, wobei der Verbindungsbereich (37) des Einstellstabs (9) eine Mehrzahl von Vorsprüngen (39), die ein äußeres Rippenprofil bilden, aufweist und die Befestigungsmittel (33) eine Mehrzahl von entsprechenden Vertiefungen (40) aufweist, die ein entsprechendes inneres geripptes Profil bilden.

7. Verfahren zum Verbinden eines länglichen Körpers (3) mit einem beweglichen Körper (5), insbesondere eines Steuerkabels (3) mit einem beweglichen Körper (5) eines Gangschaltungssystems (11) in einem Fahrzeug, wobei ein Verbindersystem (1) verwendet wird, das eine Endeinheit (13), einen Einstellstab (9) und zu betätigende Befestigungsmittel (33) aufweist, wobei der Einstellstab (9) mit dem länglichen Körper (3) verbunden ist und die Endeinheit (13) mit dem beweglichen Körper (5) verbindbar ist, wobei das Verfahren die folgenden Schritte aufweist:
- Bewegen des Einstellstabs (9) in eine erste axiale Stellung relativ zu der Endeinheit (13), in der der Einstellstab (9) relativ zu der Endeinheit (13) drehbar ist,
- anschließend Einstellen der Drehstellung des Einstellstabs (9) relativ zu der Endeinheit (13),
- anschließend Bewegen des Einstellstabs (9) in eine zweite axiale Stellung relativ zu der Endeinheit (13), in der der Einstellstab (9) gegen Drehung relativ zu Endeinheit (13) festgesetzt ist, und
- anschließend Festlegen des Einstellstabs (9) gegen eine axiale Bewegung relativ zu der Endeinheit (13).

## Revendications

1. Système de liaison (1), pour relier un corps allongé (3) à un corps mobile (5), en particulier un câble de commande (3) à une partie mobile (5) d'un système de changement de vitesses (11) dans un véhicule, dans lequel le système de liaison (1) comprend une unité terminale (13), une tige d'ajustement (9) et des moyens de fixation (33) actionnables, dans lequel la tige d'ajustement (9) est susceptible d'être reliée au corps allongé (3) et l'unité terminale (13) est susceptible d'être reliée au corps mobile (5),
**caractérisé en ce que**
la tige d'ajustement (9) présente une première position axiale et une deuxième position axiale par rapport à l'unité terminale (13), et dans lequel la tige d'ajustement (9) est susceptible de tourner par rapport à l'unité terminale (13), dans la première position axiale et verrouillée contre toute rotation par rapport à l'unité terminale (13), dans la deuxième position axiale, et
le moyen de fixation (33) actionnable est capable de fixer la tige d'ajustement (9) contre tout déplacement axial par rapport à l'unité terminale (13) dans la deuxième position axiale.

2. Système de liaison selon la revendication 1, dans lequel la tige d'ajustement (9) comprend une partie de montage (45) et l'unité terminale (13) comprend une cavité longitudinale (25) ayant une première partie (47) et une deuxième partie (43), dans lequel la partie de montage (45) de la tige d'ajustement (9) est située à l'intérieur de la première partie (47) de la cavité (25), lorsque la tige d'ajustement (9) se trouve dans la première position axiale par rapport à l'unité terminale (13), et la partie de montage (45) de la tige d'ajustement (9) est située dans la deuxième partie (43) de la cavité (25), lorsque la tige d'ajustement (9) se trouve dans la deuxième position axiale par rapport à l'unité terminale (13).

3. Système de liaison selon la revendication 2, dans lequel la forme extérieure, observée en coupe transversale, de la partie de montage (45) de la tige d'ajustement (9) se monte géométriquement dans la deuxième partie (43) de la cavité (25), de manière que la tige d'ajustement (9) soit verrouillée contre toute rotation par rapport à l'unité terminale (13) dans la deuxième position axiale.

4. Système de liaison selon la revendication 3, dans lequel la forme extérieure, observée en coupe transversale, de la partie de montage (45) de la tige d'ajustement (9) et la forme intérieure, observée en coupe transversale, de la deuxième partie (43) de la cavité (25) sont hexagonales.

5. Système de liaison selon l'une quelconque des revendications précédentes, dans lequel la tige d'ajustement (9) comprend une partie de verrouillage (37) ayant au moins une saillie (39) adaptée pour être mise en prise par au moins une cavité (40) correspondante du moyen de fixation (33).

6. Système de liaison selon la revendication 5, dans lequel la partie de verrouillage (37) de la tige d'ajustement (9) présente une pluralité de saillies (39) formant un profil extérieur nervuré, et le moyen de fixation (33) comprend une pluralité de cavités (40) correspondantes, formant un profil intérieur nervuré correspondant.

7. Procédé pour relier un corps allongé (3) à un corps mobile (5), en particulier un câble de commande (3) à une partie mobile (5) d'un système de changement de vitesses (11) dans un véhicule, utilisant un système de liaison (1) comprenant une unité terminale (13), une tige d'ajustement (9) et des moyens de fixation (33) actionnables, dans lequel la tige d'ajustement (9) est reliée au corps allongé (3) et l'unité terminale (13) est susceptible d'être reliée au corps mobile (5), dans lequel le procédé comprend les étapes ci-après :
- déplacement de la tige d'ajustement (9) dans une première position axiale par rapport à l'unité terminale (13), dans laquelle la tige d'ajustement (9) est susceptible de tourner par rapport à l'unité terminale (13),
- ensuite, ajustement de la position angulaire de la tige d'ajustement (9) par rapport à l'unité terminale (13),
- puis déplacement de la tige d'ajustement (9) dans une deuxième position axiale par rapport à l'unité terminale (13), dans laquelle la tige d'ajustement (9) est verrouillée contre toute rotation par rapport à l'unité terminale (13), et
- puis fixation de la tige d'ajustement (9) contre tout déplacement axial par rapport à l'unité terminale (13).
